# EUROPEAN PATENT SPECIFICATION

(11) **EP 1 777 515 B1**
(45) Date of publication and mention of the grant of the patent: **06.05.2009**
(21) Application number: 06117671.5
(22) Date of filing: 21.07.2006
(51) Int. Cl.: G01N 30/32, G01F 1/90

(54) **Flow meter with a metering device and a control unit**
Durchflussmesser mit einer Messvorrichtung und einer Steuereinheit
Débitmètre avec dispositif de mesure et unité de commande

(43) Date of publication of application: 25.04.2007
(73) Proprietor: Agilent Technologies, Inc., Santa Clara, CA 95051 (US)
(72) Inventor: Witt, Klaus, 75210 Keltern (DE); Herzog, Philip, 76297 Stutensee (DE)
(74) Representative: Barth, Daniel Mathias

(56) References cited:
- EP-A2- 0 458 125
- DE-B3- 10 331 228
- US-A- 2 966 798
- US-A- 4 905 161

## Description

### BACKGROUND ART

The present invention relates to a flow meter.

Flow meters are known in the art. They can be realized, for example, as flow through flow meters. The US 4,283,945 shows a volumeter, in particular for use in liquid chromatography. The volumeter comprises a metering chamber for the volume to be measured. The US 6,386,050 B1 shows a system and method for measuring a flow rate within a fluid-bearing passage way include introducing heat fluctuations into the flow and then non-invasively monitoring the effects of the heat fluctuations. The US 4,003,679 and the 4,599,049 show different high pressure pumping systems.

DE 10331228 B3 discloses determining an injected liquid volume. US 4,905,161 A discloses a flow stability reporting system for a liquid chromatography system.

### DISCLOSURE

It is an object of the invention to provide an improved flow measurement device. The object is solved by the independent claim(s). Further embodiments are shown by the dependent claim(s).

According to embodiments of the present invention, a flow meter with a metering device and a control unit is suggested. The metering device is adapted for intaking and thus inversely metering a defined volume of a fluid, for example, for measuring a defined volume and/or flow rate of the fluid. The control unit is adapted for controlling the fluid intake of the metering device. Advantageously, the fluid intake can be controlled to an optimal value, wherein said value can be read out and provides the information about the volume and/or the flow rate of the fluid taken in and metered by the metering device of the flow meter. Advantageously, at any time - the metering device does not have to be filled totally to give a measurement.

Embodiments may comprise one or more of the following. The sucking rate of the metering device can be a control variable or a dependent variable of a/of control variable/s of the control unit. The control unit or rather the resulting closed loop control system can behave like a master controller or servo drive, wherein the flow rate of a fluid source coupled to the metering device behaves like a reference input for the master controller. In difference to such a master controller, the reference input, the flow rate of the coupled flow source is an unknown quantity that has to be indirectly determined or measured. The flow rate can be measured indirectly, for example, by measuring and controlling a variable that is dependant on the flow rate, for example, the system pressure or admission pressure (controlled condition) of the metering device. Besides this, the level of a container coupled to the flow source and to the metering device can be the controlled condition.

Advantageously, under the premise of such a constant controlled condition, for example the system pressure and/or the level of said container, the flow rate of the flow source is substantially equal to the sucking rate of the metering device. Consequently, the sucking rate or rather the control variable of the control unit can be used under the premise of a constant controlled condition of the controlled system for determining the flow rate of the flow source.

By measuring and controlling a variable that is dependant on the flow rate and using the metering device as a control element by metering a defined volume of a fluid or rather, for example, by adjusting the sucking rate of the flow meter to a value substantially equal to the negative value of the flow rate of a coupled flow source, the flow rate can be determined indirectly by interpreting the parameters of the control unit. Advantageously, any control deviation or rather the actual value of a controlled condition as necessarily measured by a sensor of the closed-loop control system can also be considered for determining the flow rate of the flow source.

Embodiments may comprise one or more of the following. The flow meter can comprise a displacement device, at least partly capable of precise displacement. For example, the metering device can comprise and/or realize such a displacement device. The metering device can comprise a pumping chamber. By this, the metering device can realize a volumetric displacement flow meter with at least one intake connectable to the flow source. Advantageously, the control unit, for example by adjusting and/or controlling a displacement member, for example a piston, can actively influence and/or control the fluid intake.

Advantageously, the control unit can actively support the displacement of the volume, for example, by adjusting the according position of the piston of the metering device. By this, the metering device is not or less retroactive to upstream coupled devices, for example, to the flow source itself. Any undesired pressure drop can be avoided. In other words, the energy for the piston movement is delivered by a separate power source - of the control element, the metering device. Therefore, the energy has not to be drawn from the measured system itself - causing a pressure drop - as usually happens in conventional displacement flow meters. In other embodiments, the control element can draw energy or deliver energy, for example, by adjusting a pressure drop or pressure increase of the metering device to a desired value.

The displacement of the displacement device can be a control variable of the control unit. Furthermore, the volume of the pumping chamber can be a control variable of the control unit. The control unit can actively influence and/or control the displacement and/or a displacement rate of the displacement device and/or the volume of the pumping chamber. By this, the displacement and/or the volume of the pumping chamber can actively be adjusted to a value or to a volume guaranteeing a constant controlled condition of the control unit.

The metering device can comprise a piston projecting into the pumping chamber. Advantageously, a movement of the piston changes the volume of the pumping chamber and thus the displacement or rather the fluid intake of the metering device.

Besides this, the metering device can comprise two pistons and a valve adapted for metering a substantially continuous flow. The valve can comprise two operating positions for connecting the intake of the metering device with one of the pistons and the other one of the pistons with the outlet or a waste, and reversed. By this, the metering device can substantially continuously measure the flow.

The position of the piston or of the pistons can be a control variable of the control unit. By this, the control unit can influence and/or control the stroke volume of the pumping chamber/s of the metering device.

Furthermore, the velocity of the piston or of the pistons can be a control variable of the control unit. By this, a time dependant change of the volume of the pumping chamber can be influenced and/or controlled by the control unit. Consequently, the control unit can control the fluid intake or rather the sucking rate of the metering device.

The position of a servo drive adapted for actuating the piston or the pistons can be a control variable of the control unit. Advantageously, the servo drive is coupled to the piston or to the pistons and consequently can influence and/or control the volume of the pumping chamber and consequently the volume of the pumping chamber/s of the metering device.

The velocity of the servo drive adapted for actuating the piston or the pistons can be a control variable of the control unit. By this, the control unit also can control the sucking rate of the metering device.

The motion sequence of the two pistons and the operating position of the valve can be control variables of the control unit. Advantageously, the control unit can control a substantially continuous fluid intake and thus a substantially continuous flow rate of the metering device. For this purpose, the valve can comprise a rotary valve adapted for realizing at least two operating positions.

Embodiments may comprise one or more of the following. The admission pressure of the metering device can be a controlled condition of the control unit. For this purpose, the flow meter can comprise a pressure sensor coupled to a flow source and to the metering device. The actual value of the pressure as measured by the pressure sensor can be read out by the control unit and used for controlling the pressure in a closed-loop manner. The flow source can be connected to the metering device. Advantageously, the flow rate of the flow source can be determined as a dependant variable of the control variable or the control variables - for example as actually calculated and output by the control unit - and the controlled condition of the control unit - for example as input into the control unit and/or as measured by an according sensor of the closed-loop control system. For example, the motion sequence of the two pistons controlled by the control unit and the operating position of the valve controlled by the control unit and the admission pressure measured by the pressure sensor can be used for calculating or determining the flow rate of the flow source connected to the metering device of the flow meter.

The metering device can comprise a multiplexer, which can be a Y-junction valve, adapted for branching off a variable percentage of a flow of the flow source. Advantageously, not the complete flow delivered by the flow source has to be sucked into the metering device for determining the flow rate of the flow source. Due to the known percentage branched off, the flow rate of the flow source can be calculated. The variable percentage can be branched off by multiplexing the flow delivered by the flow source.

The multiplexer can be adapted for coupling a plurality of flow sources to the flow meter or rather the metering device of the flow meter. Advantageously, each flow of each of the flow sources of the plurality of flow sources can be determined. For this purpose, a variable percentage of the flow of each of the plurality of flow sources can be branched off to the flow meter.

The flow meter can comprise a plurality of metering devices, wherein the multiplexer can be adapted for coupling the plurality of metering devices to the flow source. Advantageously, the multiplexer can feed time slice by time slice one metering device after the other. A variable percentage of the flow of the flow source can be branched off to each of the plurality of metering devices of the flow meter. By this, a flow source delivering a relative high flow rate can be measured by the plurality of metering devices, wherein each of metering devices is adapted for measuring a relatively low flow rate. By this, cheaper metering devices adapted for measuring lower flow rates can be used. For this purpose, each of the metering devices can comprise a buffer adapted for damping the pulsating flow delivered by the multiplexer to each of the metering devices. Advantageously, each of the metering devices can comprise an own controller and consequently realize a flow meter, wherein the system clocks of each of the controllers can be relative low.

The multiplexer can be adapted for coupling the plurality of flow sources to the plurality of metering devices. Advantageously, the different flows and/or different percentages of the flows of the flow sources can be fed to the different metering devices.

The multiplexer can be adapted for coupling the flow source or the plurality of flow sources to the metering device or the plurality of metering devices and additionally to a further device or a plurality of further devices, for example, a mass spectrograph. By this, the flow can be measured by the flow meter during phases wherein the mass spectrograph has not to be fed with the liquid delivered by the flow source.

The sucking rate of the metering device can be adjustable to a value substantially equal to the flow rate of the flow source of the metering device. Advantageously, the flow rate of the flow source can be determined by calculating and/or by reading out the adjusted sucking rate. The control unit can adjust the sucking rate. In other words, for retrieving the flow rate of the flow source, the sucking rate as calculated by the control unit can simply be read out.

Further embodiments of the invention relate to a fluidic system adapted for handling a fluid. The fluidic system comprises a flow meter as described above. Embodiments may comprise one or more of the following. The fluidic system can be adapted for analyzing a fluid and can comprise a fluid separation device for housing a fluid sample and for separating components of said fluid for analysis. Besides this, the fluidic system can comprise a fluid delivery system, for example, a high-pressure fluid delivery system. The fluid delivery system can be adapted for single component liquid or mixtures of liquids at pressures that can range from substantially ambient pressure to pressures on the order of several 100 bar.

Advantageously, the flow meter can be used for calibrating the high-pressure fluid delivery system. For this purpose, the flow meter can be connected to a high-pressure outlet of such a fluidic system.

Advantageously, any undesired side effects occurring by metering a fluid or a mixture of fluids under high pressure can be determined and thus calibrated by measuring the flow rate by the flow meter under high-pressure condition. For this purpose, a control unit adapted for controlling the fluid delivery system can be calibrated by the values determined for calibrating by the flow meter. Control units adapted for eliminating side effects occurring when metering fluids under high pressure and according fluidic systems are described in the EP 1 707 958 A1 by the same applicant.

The fluidic system can comprise a chromatographic column adapted for separating components by using a fluid delivered by said fluid delivery system. The chromatographic column can be fluidically coupled to said flow meter. Advantageously, a low-pressure outlet of the chromatographic column can be coupled to the flow meter. A high-pressure inlet of the chromatographic column can be coupled to the fluid delivery system. Due to the pressure drop of the chromatographic column, the flow meter can suck in the fluid already passed through the chromatographic column under low pressure, for example, under ambient pressure. By this, any occurrence of side effects influencing the accuracy of the measurement of the flow meter, for example, caused by mixing two fluids under high pressure, can be excluded. The fluidic system can comprise a detection device adapted for detecting the separated components within the fluid. For this purpose, the detection device can be coupled downstream to the chromatographic column. The fluidic system can comprise, for example, a chromatographic system (LC), a high performance liquid chromatographic (HPLC) system, an HPLC arrangement comprising a chip and a mass spectrograph (MS), a high throughput LC/MS system, a purification system, a micro fraction collection/spotting system, a system adapted for identifying proteins, a system comprising a GPC/SEC column, a nanoflow LC system, and/or a multidimensional LC system adapted for separation of protein digests.

Embodiments of the invention relate to a method of determining a flow rate with a flow meter, for example, a flow meter as described above. The flow meter can be adapted for determining a flow rate of a fluid delivered by a flow source. The fluid intake of the metering device can be controlled to a desired value by a control unit. Advantageously, the value of the fluid intake can be used for determining the flow rate of the flow source. The flow source can comprise a high-pressure fluid delivery system. Advantageously, the flow rate delivered by the high-pressure fluid delivery system can be measured. By this, the high-pressure delivery system can be calibrated. The high-pressure delivery system can be coupled, for example, to a restrictor or to an application such as a chromatographic column, producing a significant pressure drop. For measuring under low pressure, the flow meter can be coupled downstream to the restrictor or to the application.

Embodiments may comprise one or more of the following. The sucking rate of the metering device can be controlled as a control variable or a dependant variable of the control variable or of control variables of the control unit. The control unit can control a controlled condition in a closed-loop. Advantageously, the sucking rate can be used for determining the flow rate of the fluid delivered by the flow source.

Embodiments of the method may comprise one or more of the following: controlling a displacement rate by the control unit; controlling a volume of a pumping chamber of the metering device by the control unit as a control variable, controlling the position of a/of piston/s of the metering device by the control unit as a control variable; controlling the position of the piston/s by a servo drive as a control variable of the control unit; controlling the velocity of the piston/s by a servo drive as a control variable of the control unit; controlling the motion sequence of the pistons and the operating position of a valve by the control unit as control variables, wherein the valve is a rotary valve and comprises two operating positions.

Embodiments of the method may comprise one or more of the following: controlling a admission pressure of the metering device by the control unit as a controlled condition of the control unit; determining the flow rate of the flow source connected to the metering device as a dependant variable of the control variable/s and the controlled condition of the control unit; determining the flow rate of the flow source as a dependent variable of the motion sequence of the pistons, the operating position of the valve, and the admission pressure; operating at higher pressure to prevent outgasssing of liquid; operating at zero pressure differential to reference value to prevent leakages of the control element.

Embodiments of the method may comprise one or more of the following: branching off a variable percentage by a multiplexer, in particular an inlet Y-junction valve, of the flow meter; branching off a variable percentage by the multiplexer by multiplexing the flow of the flow source; branching off a variable percentage of the flow of the flow source to each of a plurality of metering devices of the flow meter; branching off a variable percentage of the flow of each of a plurality of flow sources to the flow meter.

Embodiments of the method may comprise one or more of the following: adjusting the sucking rate of the flow meter to a value that is substantially equal to the flow rate of the flow source; determining the sucking rate.

Embodiments of the method may comprise one or more of the following: supplying the fluidic system by a fluid delivery system, in particular a flow source, with a fluid or a composition, in particular a time-dependent composition, of at least two fluids; determining the flow rate, in particular as a function of time, by a flow meter according to embodiments of the present invention; supplying the fluidic system under high-pressure condition and determining the flow rate under high-pressure condition; calibrating the fluid delivery system by the flow meter according to embodiments of the present invention; calibrating the fluid delivery system by the flow meter according to embodiments of the present invention over a time-dependant gradient of a composition of the fluid delivered by the fluid delivery system.

Further embodiments relate to a fluidic system and may comprise one or more of the following. The fluidic system can be supplied by the fluid delivery system with a fluid or a composition, for example a time-dependant composition of at least two fluids. The flow rate, for example, as a function of time, can be determined by the flow meter. Advantageously, the fluidic system can be supplied with the fluid under high-pressure condition. The flow rate can be determined under high-pressure condition. The fluid delivery system can be calibrated by the flow meter, for example over a time-dependant gradient of the fluid delivered by the fluid delivery system.

Advantageously, the performance of the fluidic system can be verified across all solvents and any of their mixtures and/or heterogeneous mixtures, across all flows, across all pressures, for example, pressures greater than 600 bar, and/or a complete pump cycle, in particular a high speed pump cycles faster than 1 minute. The resolution per time unit of the control unit can be 20 Hz or faster for this purpose. For realizing such a resolution per time unit, the clock cycle of the control unit can comprise approximately 100 Hz or faster. Furthermore, for this purpose, the damping rate of the pressure sensor can be comparatively low and/or the pressure sensor can comprise a relative steep characteristic curve.

Advantageously, known compensation algorithms, for example, as described in the EP 1 707 958 A1 can be qualified and/or verified. Besides this, such compensation algorithms can be designed more easily based on the known flow rates determined by the flow meter. Advantageously, the performance of the fluidic system can be monitored during operation.

Besides this, the validity of external specifications can be proved by the flow meter.

Advantageously, the flow meter can be used for warranty and/or service purposes in the field. For this purpose, for example, the validity of external specifications can be proven, for example, for requalifying the performance of the system after repairing it. Advantageously, the flow meter can be used for qualifying the accuracy of any fluid delivery system, for example, of any high-pressure pump in the field. The flow meter can be used for verifying the performance of a fluidic system. Advantageously, the gained data can be used to correct analytical results. In other words, better analytical results can be achieved with fluidic systems comprising a relative inaccurately generated flow of a liquid and/or a composition of liquids. Side effects caused by such an inaccurate metering device can be compensated physically and/or mathematically in-line or rather while executing an analysis.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for determining a flow rate and/or for calibrating a fluidic system with a flow meter, in particular a flow meter as described above, wherein the fluid intake of the metering device can be determined and controlled to a value by a control unit.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a schematic view of a closed-loop control system with a flow meter,

Fig. 2 shows a schematic view of a fluidic system coupled to a flow meter with a closed-loop control system,

Fig. 3 shows a schematic view of the closed-loop control system of the flow meter of Fig. 2,

Fig. 4 shows a graph of a gradient profile starting with water and ending with acetonitrile,

Fig. 5 shows a graph of the system pressure of a fluidic system supplied with the gradient profile of Fig. 4 by a high-pressure fluid delivery system, and

Fig. 6 shows a graph of a flow accuracy in percent of said fluidic system measured by a flow meter.

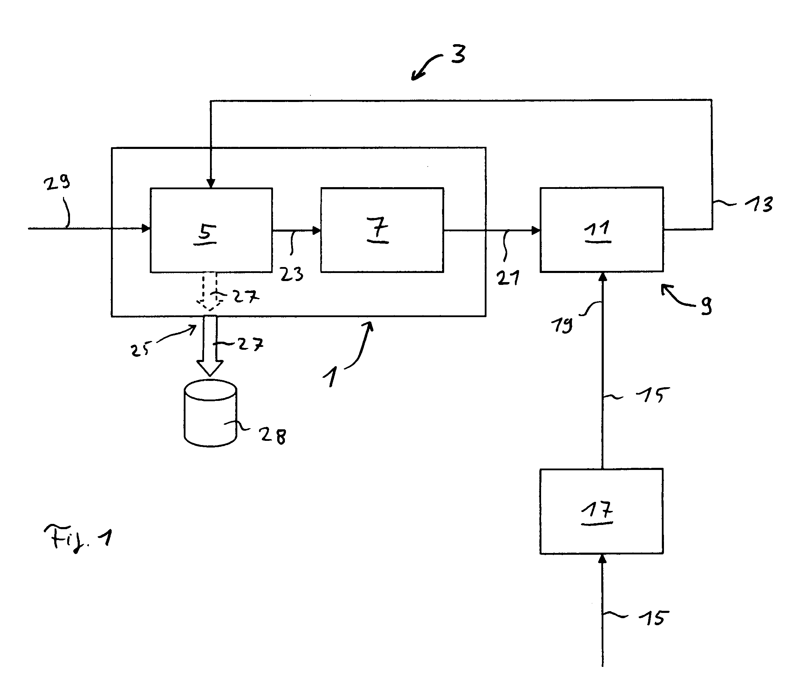

Fig. 1 shows a schematic view of a flow meter 1 being part of a closed-loop control system 3. The closed-loop control system 3 comprises a control unit 5. The control unit 5 is coupled to a control element 7. The control unit 5 controls the control element 7. The control element 7 and the control unit 5 are component parts of the flow meter 1. The control element 7 of the flow meter 1 can be coupled to a controlled system 9. The controlled system 9 comprises a sensor 11. The sensor 11 is adapted for measuring a controlled condition 13 of the closed-loop control system 3. The sensor 11 is coupled to the control unit 5.

The controlled condition 13 is influenced or rather dependent on a flow rate 15 of a fluidic system 17. The fluidic system 17 is also coupled to the controlled system 9 or rather to the sensor 11 of the controlled system 9. The flow rate 15 of the fluidic system 17 is a disturbance variable 19 of the controlled system 9.

The controlled condition 13 of the controlled system 9 can be, for example, the system pressure at an outlet of the fluidic system 17. The controlled condition 13 can be any other characteristic value of the flow rate 15 of the fluidic system 17, for example, the level within a container coupled to the outlet of the fluidic system 17.

The control element 7 can comprise a volumetric displacement flow meter or rather negative-displacement flow meter, for example, a piston type flow meter, wherein the control unit 5 actively controls a sucking rate 21 of the displacement flow meter. Advantageously, under the premise of a constant controlled condition 13, the amount of the actively controlled sucking rate 21 of the control element 7 of the flow meter 1 is substantially equal to the amount of the disturbance value 19 representing the flow rate 15 of the fluidic system 17.

The control unit 5 calculates a control value 23 that controls the control element 7, wherein the sucking rate 21 depends on the control value 23 according to the transfer characteristic of the control element 7. Thus, the controlled condition 13 as measured by the sensor 11 and/or a calculated control value 23 for controlling the control element 7 of the control unit 5 can be used for determining the sucking rate 21 and consequently the flow rate 15 of the fluidic system 17.

For receiving the flow rate 15, the flow meter 1 can comprise a data interface 25 as symbolized with two arrows 27. The data interface 25 can be coupled to a storage device 28, for example, adapted for storing a series of measurements, for example, for a certain period of time.

The level of the controlled condition can be selected by changing a set point 29 of the control unit 5 of the closed-loop control system 3.

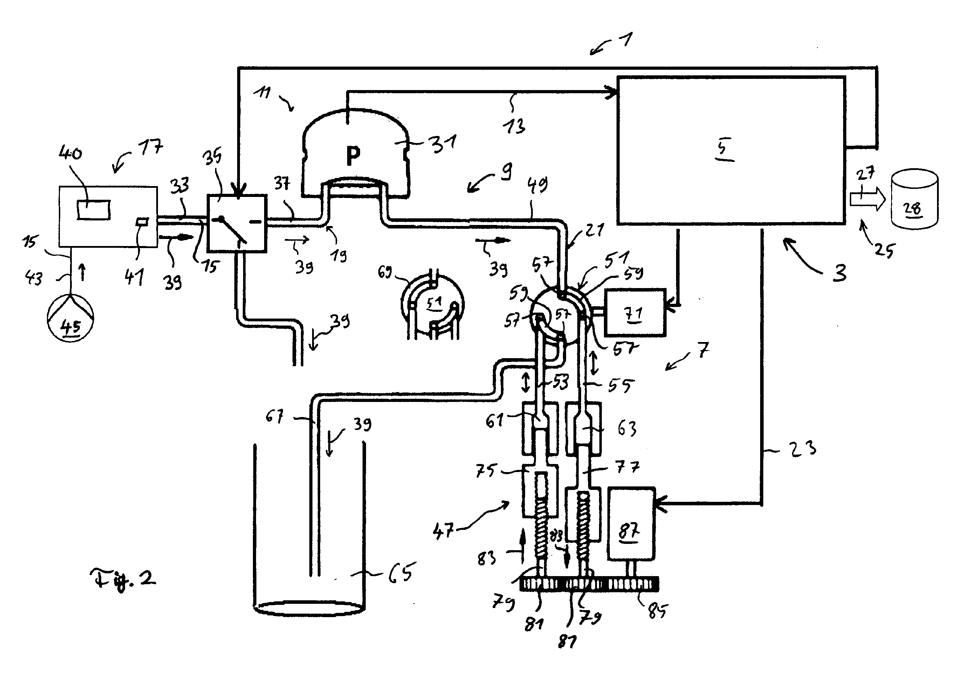

Fig. 2 shows a schematic view of a fluidic system 17 coupled to a flow meter 1 comprising a closed-loop control system 3. The closed-loop control system 3 of the flow meter 1 comprises a pressure sensor 31 coupled to and arranged downstream of the fluidic system 17 via a first conduit 33, a multiplexer comprising a Y-junction valve 35, and a second conduit 37. The flow direction within the conduits 33 and 37 is indicated with arrows 39.

The Y-junction valve 35 can be adapted for branching off, for example by multiplexing and/or branching off a continuous flow, a variable percentage of a flow of the flow source 45. Thus, not the complete flow delivered by the flow source has to be sucked into the metering device for determining the flow rate of the flow source 45. Due to the known percentage branched off, the flow rate of the flow source can be calculated. Such known percentage can achieved by time slices (pulse width modulation). Advantageously, the metering device can be designed fora lower sucking rate. In other embodiments, the multiplexer can comprise a plurality of inlets and/or a plurality of outlets, for example for coupling a plurality of flow sources 45 to a plurality of flow meters 1. For example, one flow source can be measured and/or checked after the other. Furthermore, the multiplexer can be used for coupling the flow source 45 to any other downstream device, for example, to a mass spectrograph. Advantageously, a quick performance check can be executed at a point of time when the mass spectrograph has not to be fed by the flow source. Thereafter, the mass spectrograph can be coupled to the flow source again.

The fluidic system 17 can be adapted for analyzing a fluid containing a fluidic sample, for example, with a high performance liquid chromatography process. For this purpose, the fluidic system 17 can comprise a chromatographic column 40 and a detection area 41. The chromatographic column 40 can be coupled to and arranged downstream of a flow source 45, for example to a high-pressure pump, via a third conduit 43. The flow source 45 can comprise a high-pressure meter pump system, for example, comprising one or more pistons, and/or comprising a combination of a master and a slave pump. Due to the high pressure needed for the chromatographic column 40, undesired side effects can occur in the flow source 45. This can lead to an undesired inaccurate flow rate 15 of the flow source 45. An inaccurate flow rate 15 can reduce the quality of the analysis executed with the fluidic system 17. Advantageously, such side effects can be minimized by calibrating the flow source 45, for example, over a gradient of two fluids delivered by the flow source 45. For this purpose, the flow accuracy of the flow rate 15 of the flow source 45 can be measured by the flow meter 1.

For measuring the flow rate 15 of the flow source 45, the flow meter 1 comprises a two-piston metering device 47 coupled to and arranged downstream of the pressure sensor 31 via a fourth conduit 49, a rotary valve 51 and a fifth and sixth conduit 53 and 55.

The rotary valve 51 comprises four ports 57, wherein two of each are coupled by two channels 59. The rotary valve 51 couples the fourth conduit 49 alternatively to a first pumping chamber 61 via the fifth conduit 53 and to a second pumping chamber 63 via the sixth conduit 55. Besides this, each of the pumping chambers 61 and 63 are coupled alternatively to a waste 65 via a seventh conduit 67.

Consequently, one of the pumping chambers 61 and 63 is coupled to the fluidic system 17 and the other one of the pumping chambers 61 and 63 is coupled to the waste 65. In Fig. 2, the rotary valve is shown in a position, wherein the first pumping chamber 61 is coupled to the waste 65 and the second pumping chamber 63 is coupled to the fluidic system 17. A second operating position 69 of the rotary valve 51 is indicated in Fig. 2 on the left hand side of the rotary valve 51. In the operating position 69, the second pumping chamber 63 is connected to the waste and the first pumping chamber 61 is connected to the fluidic system 17.

The rotary valve 51 is set by an actuator 71 controlled by a control unit 5 of the closed-loop control system 3 of the flow meter 1.

The pumping chambers 61 and 63 are component parts of the metering device 47 of the flow meter 1. The metering device 47 is realized as a two-piston metering device. The metering device 47 comprises a first piston 75 and a second piston 77 each actuated by a screw link actuator 79. The screw link actuators 79 of the metering device 73 are each coupled to one gear 81. The gears 81 mesh with each other, thus the screw link actuators 79 of the pistons 75 and 77 can be rotated oppositely. Consequently, the pistons 75 and 77 can be actuated opposite in direction as indicated with two double arrows 83, for example, in a blockwise, rectangular motion sequence.

One of the gears 81 of the screw link actuators 79 meshes with a drive gear 85 coupled to a servo drive 87 of the metering device 73. The servo drive 87 of the metering device can comprise, for example, an electro motor controlled by the control unit 5. In other words, the control unit 5 can control the motion sequence of the pistons 75 and 77 of the metering device 73. For this purpose, the control unit 5 can calculate the motion sequence of the pistons 75 and 77 as a control value 23 of the control unit 5 of the closed-loop control system 3 of the flow meter 1.

Besides this, the control value 23 can comprise the position of the servo drive 87, the velocity of the servo drive 87, the positions of the pistons 75 and 77, and/or the velocity of the piston 75 and 77. Besides this, the flow meter 1 or rather the piston 75 and 77 of the flow meter 1 can comprise a negative force feedback with a force sensor, wherein any force exerted to the pistons exceeding a limit value effects a movement of the pistons reducing said force. For example, the force exerted to the pistons 75 and 77 can be a control value of the control unit 5. The force exerted on the pistons 75 and/or 77 is a characteristic value of the pressure within the fifth and sixth conduit 53 and 55 coupled to the pumping chambers 61 and 63. Advantageously, thus the pressure sensor can be integrated in the metering device 47 and/or in the servo drive 87 of the metering device 47. For example, the current flow rate can be determined by interpreting the actual position of the servo drive 87, for example, by the control unit 5.

The pistons 75 and 77 protrude into the pumping chambers 61 and 63 and displace the volume of the pumping chambers 61 and 63.

The pressure sensor 31 is coupled to the control unit 5 and measures a controlled condition 13, the system pressure of the fluidic system 17 between the chromatographic column 40 and the metering device 47.

Thus, the second and the third conduits 37 and 49, and the pressure sensor 31 realize a - pressure - controlled system 9. For adjusting the controlled condition 13 - the pressure - the control unit 5 controls the servo drive 87, the rotary valve 51 via the actuator 71, and the Y-junction valve 35. For receiving the flow rate 15 of the flow source 45, the flow meter 1 or rather the control unit 5 of the flow meter 1 comprises a data interface 25 as indicated in Fig. 2 with an arrow 27. The control unit 5 can be coupled via the interface 25 to a mass storage device 28. The mass storage device 28 can sore a measurement series.

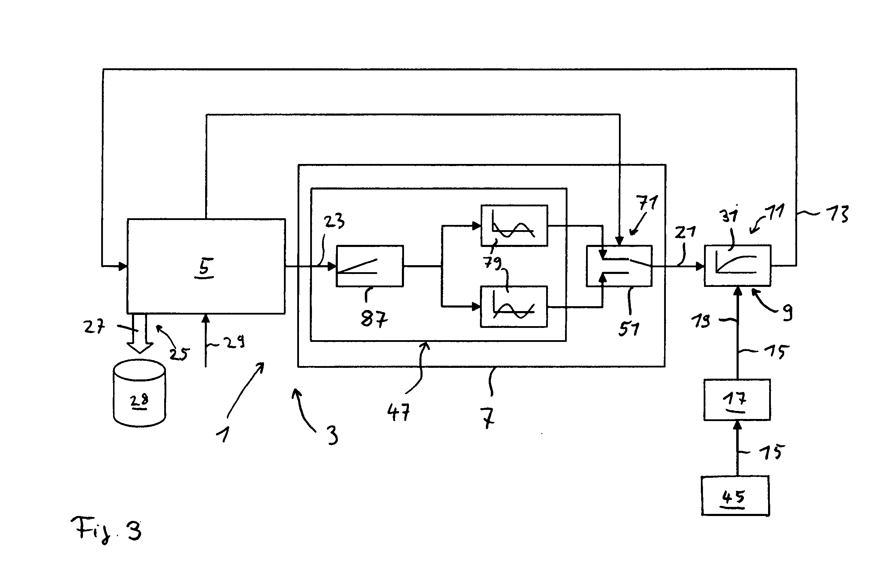

Fig. 3 shows a schematic view of the closed-loop control system 3 of the flow meter 1 of Fig. 2. The transfer characteristics of the single components of the closed-loop control system 3 of the flow meter 1 are indicated in the according rectangles. The Y-junction valve 35 is not shown. As can be seen in Fig. 3, the flow rate 15 generated by the flow source 45 is the disturbance variable of the closed-loop control system 3 of the flow meter 1. Any changes of the flow rate 15 effects the system pressure measured by the pressure sensor 31. The pressure, the controlled condition 13 is measured by the pressure sensor 31 and stabilized by the control unit 5, wherein the metering device 47 and the rotary valve 51 realize the control element 7 of the closed-loop control system 3 of the flow meter 1. By stabilizing the system pressure, the sucking rate 21 of the metering device 47 is indirectly adjusted to the amount of the flow rate 15 generated by the flow source 45, but with the opposite sign. Consequently, with the transfer characteristics of the servo drive, the screw link actuators, the rotary valve 51, and the pressure sensor 31, the flow rate of the flow source can be back-calculated out of the control value 23 and the controlled condition 13, the system pressure - for example as set and/or as measured - of the control unit 5 and can output via the interface 25 of the control unit 5.

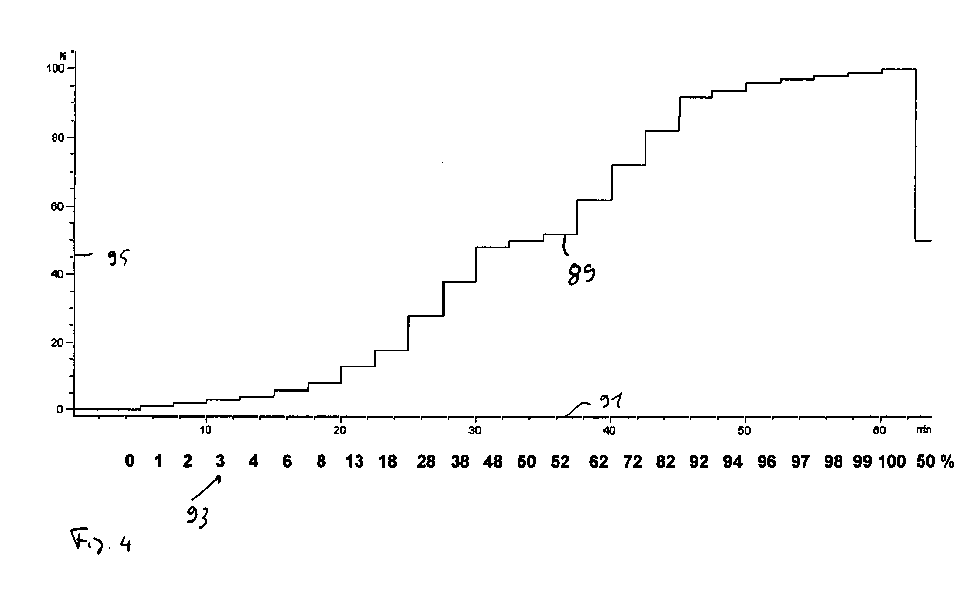

Fig. 4 shows a graph 89 of a gradient profile starting with 100 % water and ending with 100% acetonitrile. An x-axis 91 represents the time between 0 and 60 minutes, wherein a second x-axis 93 and a y-axis 95 represent the concentration of acetonitrile in percent.

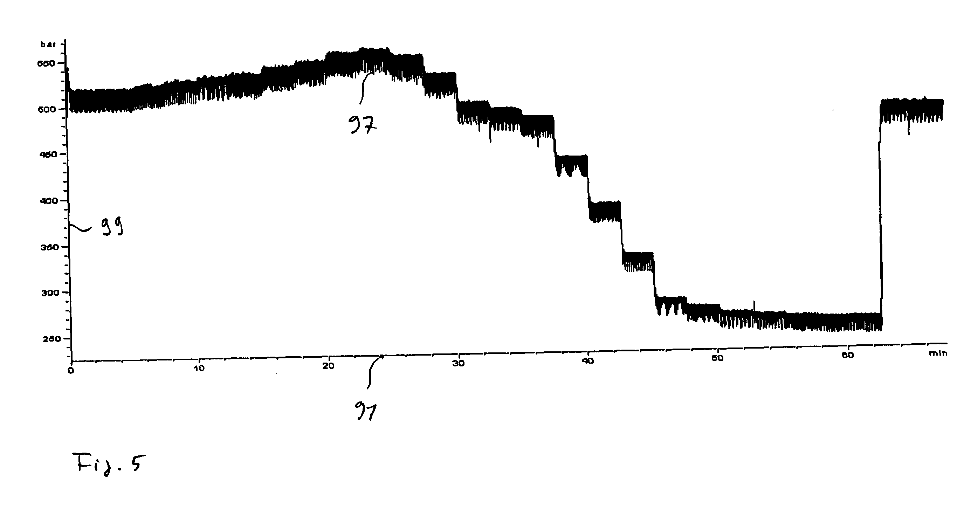

Fig. 5 shows a graph 97 of the system pressure of the fluidic system 17 supplied with the gradient profile of Fig. 4 by the high-pressure flow source 45 of the fluid delivery system 45. The x-axis 91 represents the time between 0 and 60 minutes. A y-axis 99 represents the system pressure depending on the gradient as shown by the graph 89 of Fig. 4. As can be seen in the graph 97 of Fig. 5, the system pressure increases slightly from approximately form 500 bar to 550 bar while increasing the concentration of acetonitrile from 0 % to approximately 20 %. A further increase of the concentration causes a rapid pressure drop from approximately 550 bar to approximately 250 bar. This pressure behavior can be explained in particular by changes of the viscosity of the mixture of the two fluids dependant on the composition.

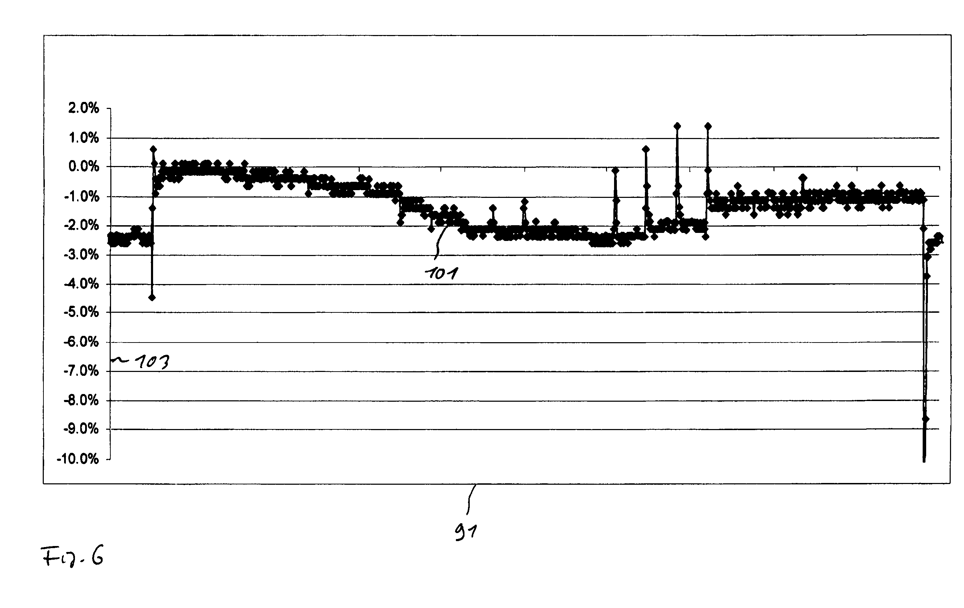

Fig. 6 shows a graph 101 of a flow accuracy of said fluidic system 17 in percent measured by the flow meter 1. The x-axis 91 represents the time-axis between 0 and 60 minutes. A y-axis 103 represents the accuracy of the flow rate 15 of the flow source 45 as a function of the time and of the gradient of composition as represented by the graph 89 of Fig. 4. It can be seen that the pressure variation as shown by the graph 97 of the Fig. 5 together with other side effects causes a deviation of the desired flow rate 15 approximately up to minus 2.5 %. The graph 101 of Fig. 6 can be obtained by the flow meter 1 as a function of time and of the gradient as shown in the graph 89 of Fig. 4.

Advantageously, the graph 101 of Fig. 6 can be used for calibrating the high-pressure flow source 45 of the fluidic system 17. For this purpose, the fluidic system 17 can comprise a not shown control unit adapted for correcting the side effects caused by mixing and compressing the fluids water and acetonitrile as depicted in the graph 101 of Fig. 6.

The actuator 71 of the rotary valve 51 can comprise an incremental encoder. The pressure sensor 31 can be realized as a high-pressure sensor. The pressure control routines of the control unit 5 tune the flow value (as a negative flow) or rather the sucking rate 21 of the metering device 47 of the flow meter 1. The flow value can be recorded, for example, by the mass storage device 28, wherein a data trace, for example the graph 101 of Fig. 6 can be generated. The data can be generated, for example, with a system clock as short as 100 Hz.

Advantageously, the flow meter 1 can be used as a diagnostic feature to catch any undesired leakage flow of the fluidic system 17. The calibration routines, for example, based on the graph 101 as show in Fig. 6, can reach an accuracy of the flow source 45 as less as 0.1 %. Besides this, a backlash compensation correction can be realized, for example, up to 60 nl total volume. Furthermore, the flow meter 1 can be used as a safety feature, for example, for detecting power fail, overpressure, and so on. Finally, a special wakeup routine on LS-indicator can be realized.

Advantageously, a pressure control valve is not necessary because the control unit 5 can adjust any desired set point 29 as the measuring pressure. For example, the system can be operated at higher pressure. By this, any undesired gassing of the fluid delivered by the flow source 45 can be avoided. The flow rate can be measured at the same pressure as at the end of the chromatographic column 39 or at any desired higher pressure adjustable by the closed-loop control system 3 of the metering device 1. For example, at zero pressure differential to reference value, for example ambient pressure, to prevent any undesired leakages of the control element (7).

Advantageously, the metering device of the flow meter can be used as described above or as a reference flow source. For this purpose, the flow meter can be coupled with a fluid delivery system, for example, a fluid container.

The fluidic system 17 can be adapted for analyzing liquid. More specifically, the fluidic system 17 can be adapted for executing at least one microfluidic process, for example an electrophoresis and/or a liquid chromatographic process, for example a high performance liquid chromatographic process (HPLC). Therefore, the fluidic system 17 can be coupled to a liquid delivery system 45, in particular to a pump, and/or to a power source. For analyzing liquid or rather one or more components within the liquid, the fluidic system 17 can comprise a detection area 41, such as an optical detection area and/or an electrical detection area being arranged close to a flow path within the fluidic system 17. The fluidic system 17 can be coupled to the flow meter 1 for determining or measuring the flow rate of the liquid delivery system 45. Otherwise, the fluidic system 17 can be coupled to a laboratory apparatus, for example to a mass spectrometer, for analyzing the liquid. For executing an electrophoresis, the flow path can comprise a gel. Besides this, the fluidic system 17 can be a component part of a laboratory arrangement.

## Claims

1. A flow meter (1) comprising
a sensor (11) fluidically coupled to an outlet of a fluidic system (17) for detecting a controlled condition (13) that is dependent on a flow rate of a fluid received from the outlet, and
a metering device (47) adapted for intaking and metering a defined volume of the fluid received from the outlet,
**characterized by**
a control unit (3, 5) adapted to stabilize the controlled condition by controlling the fluid intake of the metering device (47),
wherein
the controlled condition (13) is one of: an admission pressure of the metering device (47), and a level of a container coupled to the outlet of the fluidic, system (17) and to the metering device (47), and
the control unit (3, 5) is adapted to calculate the flow rate of the fluid from the fluid intake of the metering device.

2. The flow meter of claim 1, wherein the sucking rate of the metering device (47) is a control variable (23) or a dependent variable of one or more control variables of the control unit (3, 5).

3. The flow meter of claim 1 or 2, wherein the metering device (47) comprises
a pumping chamber (61,63), wherein the volume of the pumping chamber (61,63) is a control variable (23) of the control unit (3, 5).

4. The flow meter of the preceding claim, comprising a piston (75,77) projecting into the pumping chamber (61,63), wherein
at least one of the position and the velocity of the piston (75,77) is a control variable (23) of the control unit (3, 5).

5. The flow meter of claim or any one of the above claims, comprising
a displacement device at least partly being capable of precise displacement,
wherein the displacement of the displacement device is a control variable (23) of the control unit (3, 5).

6. The flow meter of claim 1 or any one of the above claims, wherein
a sucking rate (21) of the metering device (47) is adjustable to a value substantially equal to the flow rate (15) of a flow source (45) connected to the metering device (47).

7. The flow meter of claim 1 or any one of the above claims, wherein:
the metering device (47) comprises at least one of a multiplexer and an inlet Y-junction valve (35), adapted for branching off a variable percentage of the flow rate (15) of the flow source (45).

8. A fluidic system (17) comprising:
a fluid separation device (40) for separating components of a fluid , and
a flow meter (1) according to any one of the above claims, fluidically coupled to an outlet of the fluid separation device (40) for determining a flow rate at the outlet.

9. The fluidic system of the preceding claim, comprising
a fluid delivery system (45) for delivering fluid to the fluid separation device (40),

10. The fluidic system of claim 8 or 9, wherein
the fluid separation device comprises a chromatographic column (40) adapted for separating components of said fluid, wherein an outlet of said chromatographic column (40) is fluidically coupled to said flow meter (1).

11. The fluidic system of any one of the claims 8-10, comprising
a detection device (41) adapted for detecting said separated components within said fluid.

12. A method of determining a flow rate, comprising:
fluidically coupling a sensor (11) to an outlet of a fluidic system (17) for detecting a controlled condition (13) that is dependent on the flow rate of a fluid received from the outlet, and
intaking and metering a defined volume of the fluid received from the outlet with a metering device (47),
**characterized by**
stabilizing the controlled condition by controlling the fluid intake of the metering device (47), and
calculating the flow rate of the fluid from the fluid intake of the metering device,
wherein the controlled condition (13) is one of: an admission pressure of the metering device (47), and a level of a container coupled to the outlet and to the metering device (47).

13. A software product for executing the method of the preceding claim, when run on a data processing system such as a computer.

14. The software product of the preceding claim being stored on a data carrier.

## Patentansprüche

1. Durchflussmesser (1), der aufweist:
einen durch Flüssigkeit mit einem Ablauf eines Fluidsystems (17) verbundenen Sensor (11) zum Detektieren einer kontrollierten Bedingung, die von einer Flussrate einer von dem Ablauf aufgenommenen Flüssigkeit abhängt, und
eine Zumesseinheit (47) zum Einlassen und Zumessen eines definierten Volumens der von dem Ablauf aufgenommenen Flüssigkeit,
**gekennzeichnet durch**
eine Steuereinheit (3, 5) zum Stabilisieren der kontrollierten Bedingung **durch** Steuerung der Flüssigkeitsaufnahme der Zumesseinheit (47),
wobei
als kontrollierte Bedingung (13) eine der folgenden Bedingungen infrage kommt: ein Eintrittsdruck der Zumesseinheit (47) und ein Pegel eines mit dem Ablauf des Fluidsystems (17) und der Zumesseinheit (47) verbundenen Behälters, und
wobei die Steuereinheit (3, 5) zum Berechnen der Flussrate der Flüssigkeit aus der Flüssigkeitsaufnahme der Zumesseinheit dient.

2. Durchflussmesser nach Anspruch 1, wobei die Ansauggeschwindigkeit der Zumesseinheit (47) eine Steuervariable (23) oder eine abhängige Variable einer oder mehrerer Steuervariablen der Steuereinheit (3, 5) darstellt.

3. Durchflussmesser nach Anspruch 1 oder 2, wobei die Zumesseinheit (47) aufweist:
eine Pumpkammer (61, 63), wobei das Volumen der Pumpkammer (61, 63)
eine Steuervariable (23) der Steuereinheit (3, 5) darstellt.

4. Durchflussmesser nach dem vorhergehenden Anspruch, der einen in die Pumpkammer (61, 63) ragenden Kolben, 75, 77) aufweist, wobei
mindestens die Position und/oder die Geschwindigkeit des Kolbens (75, 77) eine Steuervariable (23) der Steuereinheit (3, 5) darstellt.

5. Durchflussmesser nach Anspruch 1 oder einem beliebigen der vorhergehenden Ansprüche, wobei der Durchflussmesser aufweist:
eine Verdrängungseinrichtung, die zumindest teilweise eine präzise Verdrängung bewirken kann,
wobei die Verdrängung der Verdrängungseinrichtung eine Steuervariable (23) der Steuereinheit (3, 5) darstellt.

6. Durchflussmesser nach Anspruch 1 oder einem beliebigen der vorhergehenden Ansprüche, wobei
eine Ansauggeschwindigkeit (21) der Zumesseinheit (47) auf einen Wert eingestellt werden kann, der im Wesentlichen gleich der Fließgeschwindigkeit (15) einer mit der Zumesseinheit (47) verbundenen Flüssigkeitsquelle (45) ist.

7. Durchflussmesser nach Anspruch 1 oder einem beliebigen der vorhergehenden Ansprüche, wobei:
die Zumesseinheit (47) mindestens einen Verteiler und/oder ein Y-Zweig-Einlassventil (35) zum Abzweigen eines veränderlichen Anteils der Fließgeschwindigkeit (15) der Flüssigkeitsquelle (45) aufweist.

8. Fluidsystem (17), das aufweist:
eine Flüssigkeitstrenneinrichtung (40) zum Trennen der Komponenten einer Flüssigkeit und
einen Durchflussmesser (1) nach einem beliebigen der vorhergehenden Ansprüche, der durch eine Flüssigkeit mit einem Ablauf der Flüssigkeitstrenneinrichtung (40) verbunden ist, um eine Fließgeschwindigkeit am Ablauf zu ermitteln.

9. Fluidsystem nach dem vorhergehenden Anspruch, das aufweist:
ein Flüssigkeitszufuhrsystem (45) zum Zuführen von Flüssigkeit zur Flüssigkeitstrenneinrichtung (40).

10. Fluidsystem nach Anspruch 8 oder 9, wobei
die Flüssigkeitstrenneinrichtung eine Chromatographiesäule (40) zum Trennen der Komponenten der Flüssigkeit aufweist, wobei ein Ablauf der Chromatographiesäule (40) durch eine Flüssigkeit mit dem Durchflussmesser (1) verbunden ist.

11. Fluidsystem nach einem beliebigen der Ansprüche 8 bis 10, das aufweist:
eine Detektionseinheit (41) zum Detektieren der getrennten Komponenten in der Flüssigkeit.

12. Verfahren zur Ermittlung einer Fließgeschwindigkeit, wobei das Verfahren aufweist:
Verbinden eines Sensors (11) durch eine Flüssigkeit mit einem Ablauf eines Fluidsystems (17) zum Detektieren einer kontrollierten Bedingung (13), die von der Fließgeschwindigkeit einer von dem Ablauf aufgenommenen Flüssigkeit abhängt,
Einlassen und Zumessen eines definierten Volumens der vom Ablauf aufgenommenen Flüssigkeit mittels einer Zumesseinheit,
**gekennzeichnet durch**
Stabilisieren der kontrollierten Bedingung **durch** Steuerung der Flüssigkeitsaufnahme der Zumesseinheit (47), und
Berechnen der Fließgeschwindigkeit der Flüssigkeit aus der Flüssigkeitsaufnahme der Zumesseinheit, und
wobei als kontrollierte Bedingung (13) eine der folgenden Bedingungen infrage kommt: ein Eintrittsdruck der Zumesseinheit (47) und ein Pegel eines mit dem Ablauf und der Zumesseinheit (47) verbundenen Behälters.

13. Softwareprodukt zum Ausführen des Verfahrens nach dem vorhergehenden Anspruch, wenn das Softwareprodukt auf einem Datenverarbeitungssystem wie beispielsweise einem Computer ausgeführt wird.

14. Softwareprodukt nach dem vorhergehenden Anspruch, das auf einem Datenträger gespeichert ist.

## Revendications

1. Débitmètre (1) comprenant
un capteur (11) couplé fluidiquement à la sortie d'un système fluidique (17) pour la détection d'un état commandé (13) qui dépend du débit d'un fluide en provenance de la sortie, et
un dispositif de mesure (47) adapté pour l'entrée et la mesure d'un volume défini du fluide en provenance de la sortie, **caractérisé en ce que**
une unité de commande (3) est adaptée pour stabiliser l'état commandé en commandant l'entrée du fluide du dispositif de mesure (47),
dans lequel
l'état commandé (13) est celui d'une pression d'admission du dispositif de mesure (47) et d'un niveau d'un récipient couplé à la sortie du système fluidique (17) et au dispositif de mesure (47), et
l'unité de commande (3, 5) est adaptée pour calculer le débit du fluide depuis l'entrée du fluide du dispositif de mesure.

2. Débitmètre selon la revendication 1, dans lequel la vitesse d'aspiration du dispositif de mesure (47) est une variable de commande (23) ou une variable dépendant d'une ou de plusieurs variables de commande de l'unité de commande (3, 5).

3. Débitmètre selon la revendication 1 ou 2, dans lequel le dispositif de mesure (47) comprend
une chambre de pompage (61,63) dans laquelle le volume de la chambre de pompage (61,63) est une variable de commande (23) de l'unité de commande (3, 5).

4. Débitmètre selon la revendication qui précède, comprenant un piston (75,77) débordant dans la chambre de pompage (61,63) dans lequel
au moins une des positions et la vitesse du piston (75,77) sont des variables de commande (23) de l'unité de commande (3, 5).

5. Débitmètre suivant la revendication 1 ou l'une quelconque des revendications ci-dessus, comprenant :
un dispositif de déplacement au moins partiellement capable d'un déplacement précis.
dans lequel le déplacement du dispositif de déplacement est une variable de commande (23) de l'unité de commande (3,5).

6. Débitmètre selon la revendication 1 ou l'une quelconque des revendications ci-dessus, dans lequel
une vitesse d'aspiration (21) du dispositif de mesure (47) est réglable sur une valeur substantiellement égale au débit (15) d'une source d'écoulement (45) reliée au dispositif de mesure (47).

7. Débitmètre selon la revendication 1 ou l'une quelconque des revendications ci-dessus, dans lequel :
le dispositif de mesure (47) comprend au moins un multiplexeur et un robinet-raccord en Y d'entrée (35), adapté pour la dérivation d'un pourcentage variable du débit (15) de la source d'écoulement (45).

8. Système fluidique (17) comprenant :
un dispositif de séparation du fluide (40) pour la séparation des composants d'un fluide, et
un débitmètre (1) selon l'une quelconque des revendications ci-dessus, couplé fluidiquement à une sortie du dispositif de séparation du fluide (40) pour définir un bas débit à la sortie.

9. Système fluidique selon la revendication qui précède, comprenant
un système de distribution du fluide (45) pour la distribution de fluide au dispositif de séparation du fluide (40).

10. Système fluidique selon la revendication 8 ou 9, dans lequel
le système de séparation du fluide comprend une colonne chromatographique (40) adaptée pour séparer les composants dudit fluide, dans lequel une sortie de ladite colonne chromatographique (40) est couplée fluidiquement audit débitmètre (1).

11. Système fluidique selon l'une quelconque des revendications 8 à 10, comprenant
un système de détection (41) adapté pour la détection desdits composants séparés dans ledit fluide.

12. Méthode pour la détermination d'un débit, comprenant :
le couplage fluidiquement d'un capteur (11) à la sortie d'un système fluidique (17) pour la détection d'un état commandé (13) qui dépend du débit d'un fluide provenant de la sortie et
l'entrée et la mesure d'un volume défini du fluide provenant de la sortie à l'aide d'un dispositif de mesure
**caractérisé par** la
stabilisation de l'état commandé par la commande de l'entrée du fluide du dispositif de mesure (47),
le calcul du débit du fluide depuis l'entrée du fluide du dispositif de mesure et
dans laquelle l'état commandé (13) est celui d'une pression d'admission du dispositif de mesure (47) et un niveau d'un récipient couplé à la sortie et au dispositif de mesure (47).

13. Produit logiciel pour l'exécution de la méthode selon la revendication précédente lorsqu'il est exploité sur un système informatique comme un ordinateur.

14. Produit logiciel selon la revendication qui précède, stocké sur un support de données.
